# EUROPEAN PATENT SPECIFICATION

(11) **EP 3 366 469 B1**
(45) Date of publication and mention of the grant of the patent: **02.07.2025**
(21) Application number: 18166003.6
(22) Date of filing: 02.12.2013
(51) Int. Cl.: B32B 27/30, B32B 27/32, B32B 27/34, B32B 27/36, B65D 65/40

(54) **HIGH ABUSE HEAT SHRINKABLE FILM**
WIDERSTANDSFÄHIGE WÄRMESCHRUMPFBARE FOLIE
FILM THERMORÉTRACTABLE À FORTE RÉSISTANCE CONTRE LES MAUVAIS TRAITEMENTS

(30) Priority: 03.12.2012 EP 12195278
(43) Date of publication of application: 29.08.2018
(62) Divisional of application: 13195327.5
(73) Proprietor: Flexopack S.A., 194 00 Koropi (GR)
(72) Inventor: Ginosatis, Dimitris, 19400 Koropi Attica (GR)
(74) Representative: Isarpatent

(56) References cited:
- EP-A1- 1 566 265
- EP-A1- 1 854 625
- EP-A2- 0 810 087
- EP-B1- 0 149 321
- WO-A1-99/55528
- WO-A2-2006/063208
- MARK JAMES E.: "Polymer Data Handbook", POLYMER DATA HANDBOOK, 1 January 1999 (1999-01-01), New York, NY [u.a.], pages 945 - 945, XP055948548, ISBN: 978-0-19-510789-0, Retrieved from the Internet <URL:-> [retrieved on 20220803]

## Description

The present invention refers to a multilayer heat shrinkable film characterized by a combination of desirable properties, such as high shrinkage, good optical properties, excellent sealability, high abuse and high puncture resistance. The invention further is directed to a method of producing said film. The invention is further directed to the use of said film or bags and pouches made thereof for packaging goods as for example food products. The invention also refers to tubes made with the film.

Generally, the packaging of food items by means of a heat shrinkable bag comprises the following steps
1. Putting the food item inside the bag and removing the air (vacuumising) with the help of a vacuum device.
2. Sealing of the open end of the bag.
3. Placing the vacuum pack in a heat shrinking media such as hot water under a temperature that ensures the shrink of the pack (e.g. 90°C).
4. The pack is ready and is characterized by appealing appearance and long shelf life because of the absence of oxygen.

These films need high shrink properties and good optics to ensure an excellent appearance and excellent sealability so that there is no entrance of oxygen to the pack as this would be detrimental for the shelf life of the food.

In some cases, where the food is stored in frozen conditions for example, there is the possibility to use a non gas barrier film. The other characteristics remain the same.

Packaging films with the above properties are well known in the art.

A problem that is often found in the art is that during the packaging process the items to be packed are extremely tough or hard (e.g. bone-in meat pieces). This results in breakages of the plastic film during the packaging process. Packaging materials with high abuse and puncture resistance are desirable in order to withstand the packing of hard products with less scrap.

This problem has been addressed in the past.

Patent US 6183791 proposes the use of heat shrinkable film bonded to a heat shrinkable patch which adds strength to the film. This solution is effective but very expensive.

Patent EP1566265 recommends the use of styrene butadiene copolymer in the outside layer of the film. Even if this film has good processing and shrinkage properties, it lacks the necessary puncture resistance needed for a number of applications.

EP 0149321 relates to a heat-shrinkable laminate tubular film comprising a gas-barrier layer of a copolymer of vinylidene chloride, outer layers of a polyolefin, at least one intermediate layer of a polyamide or a thermoplastic polyester both of which show a crystal melting point of not more than 240°C and have a specified thickness, and adhesive layers disposed between any of the above layers.

EP 1566265 relates to a multilayer heat shrinkable film with particular application for use in food packaging. Described are multilayer heat shrinkable films including a layer of styrene polymer or a blend of styrene polymers and an oxygen barrier polymer layer.

EP 1854625 relates to a cook-in film and to bags, pouches and the like made therefrom. Described is a heat shrinkable film comprising a heat sealing layer comprising a polypropylene polymer with a vicat softening point of less than 105°C, preferably less than 100°C, measured according to ASTM D 1525.

### SUMMARY OF THE INVENTION

Therefore, the problem underlying the invention is to provide a heat sealable film, which has also good shrinkability, high abuse and puncture resistance and is easy to orient.

These problems are solved by the subject-matter of the independent claims. Preferred embodiments are set forth in the dependent claims.

The inventors have managed to overcome all of these problems by discovering a film combining
1. Excellent abuse and puncture resistance.
2. Excellent sealing properties over a big range of machine conditions.
3. Excellent optical properties
4. Manufacturing in a stable and controlled way.

This is achieved by a heat shrinkable film comprising at least one internal layer comprising a polyamide and another internal layer comprising a polyvinylidene chloride polymer (PVDC polymer), an outer layer comprising polyester, an inner sealing layer comprising at least one polyolefin, and a tie layer between the internal layer comprising a PVDC polymer and the inner sealing layer, the tie layer comprising an ethylene ester copolymer, wherein the film shrinks at least 10 % in at least one of the longitudinal and transverse directions when heated at 90°C for 4 seconds, the shrinkability is measured according to ASTM 2732.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90 °C for 4 seconds. The shrinkability is measured according to ASTM 2732.

The phrase "longitudinal direction" or "machine direction" herein abbreviated "MD" refers to a direction along the length of the film.

The term transverse direction herein abbreviated "TD" refers to a direction perpendicular to the machine direction.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "internal layer" refers to any film layer that is neither outer nor inner layer.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit, i.e. more than 50% of it are formed by ethylene repeating units. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalyzed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The total monomer content is less than 40%.

As used herein the phrase "ethylene vinyl acetate copolymer" refers to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates. A major amount is defined as one of more than 50%.

As used herein the term polyamide refers to homopolymers and copolymers. A typical homopolymer is polyamide 6 (poly-caprolactam). Another typical homopolymer is polyamide 12(poly-lauryllactam).

Typical copolymers are 6/66, 610, 6/12, 6/66/12, 66/610, amorphous polyamides and others. 6/66 copolymamide is a copolymer of polyamide 6 (caprolactam) and polyamide 66 (hexamethylene diamine/adipic acid unit). The abbreviations of copolyamides are well known in the art.

A copolyamide 6/66/12 is a copolymer comprising polyamide 6 units (caprolactam), polyamide 66 units (hexamethylene diamine/adipic acid) and polyamide 12 units (lauryllactam).

As used herein the term "ionomer" refers to ethylene-acid copolymers which have been neutralized by metals such as sodium, zinc, lithium or others.

The acid used is usually methacrylic or acrylic acid.

As used herein the term "nanocomposites" refers to compositions of treated clays in polymeric base.

All measurement methods mentioned herein are readily available for the skilled person. For example, they can be obtained from the American National Standards Institute at: www.webstore.ansi.org

All percentages used are per weight unless stated otherwise.

### DETAILED DESCRIPTION OF THE INVENTION

According to a first aspect the present invention is directed to a heat shrinkable film, where the film comprises at least one internal layer comprising a polyamide and one internal layer comprising a PVDC polymer, an outer layer comprising polyester, an inner sealing layer comprising at least one polyolefin, and a tie layer between the internal layer comprising a PVDC polymer and the inner sealing layer, the tie layer comprising an ethylene ester copolymer. The film has a shrinkage of at least 10% measured according to ASTM 2732 in water at 90°C in at least one of MD, TD directions.

According to a preferred embodiment of the invention, the polyamide has a melting point of more than 180°C.

According to preferred embodiment of the application, the polyamide is selected from polyamide 6, polyamide 66, polyamide 11, polyamide 12, polyether block amide (PEBA), polyamide 6/66, polyamide 6/12, polyamide 6/69, polyamide 6/6I, polyamide 610, polyamide 612, amorphous polyamide, MXD6 polymer or copolymer and polyamide 10/10.

According to a further preferred embodiment, the polyamide may be blended with any of the following: one or more other polyamides, EVOH, ethylene vinyl acetate, polyethylene, polypropylene, styrene butadiene copolymer and polyester.

According to a further preferred embodiment, the polyamide is blended to a second polyamide.

According to a further preferred embodiment, the percentage ratio (per weight) of the first and the second polyamide is from 90/10 to 10/90.

The film comprises a sealing layer. This layer allows the film to be heat sealed to itself or to another film thus allowing it to form a hermetically closed container (e.g. a bag).

In the film according to the present invention, the heat sealing layer comprises a single polyolefin or a blend of different polyolefins. In a preferred version of the structure, the sealing layer comprises at least one homogeneous polyolefin.

In another embodiment, the sealing layer comprises heterogeneous ethylene alpha olefin copolymer with density less than 0.920 g/cm³.

In a further embodiment the sealing layer comprises a homogeneous polyolefin produced with metallocene catalysts.

Between the sealing layer and the PVDC comprising layer, a tie layer is used. Materials for this tie layer are ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL^{®} from Dupont^{®} and ADMER^{®} from Mitsui^{®}.

The outer layer according to the present invention comprises polyester. Crystalline or amorphous polyesters are both possible to be used according to the invention.

Between the outer and the PVDC comprising layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred version might include maleic anhydride modified ethylene ester copolymers or maleic anhydride modified LLDPE. Commercially available materials are for example BYNEL^{®} from Dupont^{®} and ADMER^{®} from Mitsui^{®}.

Preferred polymers for the PVDC layer are PVDC copolymers. Especially preferred copolymers are:
*Vinylidene chloride-methyl acrylate copolymers
*Vinylidene chloride-vinyl chloride copolymers
*Vinylidene chloride-acrylonitrile copolymers
*Vinylidene chloride-methyl acrylate-vinyl chloride terpolymers.

Any of the layers described above may also include additives well known in the art such as slip agents, antiblocking agents, polymer processing aids, antistatics, antifogging agents, acid scavengers, odor scavengers and the like. A person skilled in the art may select the right additives according to any particular needs.

In one preferred embodiment, the multilayer film is irradiated. The irradiation may be a beam, gamma radiation, UV radiation or other.

According to a further aspect, the present invention discloses a bag or pouch comprising a film according to the present invention.

In a further aspect, the invention is directed to the use of the films or the bag or pouch of the invention for packaging food. For example, the food item is putted inside the bag and the air is removed (vacuumising) with the help of a vacuum device. Subsequently, the open end of the bag is sealed and the vacuum pack is placed in a heat shrinking media such as hot water under a temperature that ensures the shrink of the pack (e.g. 90°C). The pack than is ready and is characterized by appealing appearance and long shelf life because of the absence of oxygen.

The present invention is now described by the following structures.

STRUCTURE A (not according to the invention).

### OUTER LAYER/ INTERNAL LAYER 1/ INTERNAL LAYER 2/ PVDC LAYER/INTERNAL LAYER 3/POLYAMIDE LAYER/SEALING LAYER

In this case it is preferred the sealing layer to comprise a maleic anhydride modified polyolefin so that there is strong bonding to the polyamide layer.

The outer layer preferably can be selected from materials such as polyolefins, styrene butadiene copolymers, polyamides and polyesters.

The internal layer 1 preferably can be selected from materials similar to the outer layer.

The internal layer 2 preferably can be selected from materials that can bond strongly to PVDC polymers. Typical examples are EVA and EMA (ethylene methyl acrylate).

The tie layer between polyamide and PVDC layers may comprise materials bonding strongly to both polymers. Typical materials are EVA, EMA or maleic anhydride modified EVA and EMA materials.

### STRUCTURE B.

### OUTER LAYER/POLYAMIDE/ INTERNAL LAYER 1/ PVDC LAYER/INTERNAL LAYER 2/INTERNAL LAYER3/SEALING LAYER

In this case it is preferred the sealing layer to comprise a maleic anhydride modified polyolefin so that there is strong bonding to the polyamide layer.

The outer layer comprises polyesters.

The internal layer 1 preferably can be selected from materials that bond strongly to both polyamide and PVDC. Examples are EVA, EMA, EBA (ethylene butyl acrylate), EEA (ethylene ethyl acrylate), maleic anhydride modified EVA, maleic anhydrite modified EMA, maleic anhydrite modified EBA, maleic anhydride modified EEA.

The internal layer 2 preferably can be selected from materials that can bond strongly to PVDC polymers. Typical examples are EVA and EMA.

The tie layer between polyamide and PVDC layers may comprise materials bonding strongly to both polymers. Typical materials are EVA, EMA or maleic anhydride modified EVA and EMA materials

### EXAMPLES

### Reference Example 1

A 7 layer film is produced in a double bubble (the double bubble method is described in US 3,456,044) commercial line with the following recipe:
Outer layer 95% S1+5% additives
Internal layer 1 95%S1+5% additives
Internal layer 2 100% E1
Barrier layer, PVDC copolymer
Internal layer 3, 100% MP1
Polyamide layer, 100% PA1
Inner sealing layer, 60% P1+30%P2+10%MP2

### See table 1

The thickness of the structure is 10/10/11.5/7/14.5/10/37 starting from the outer and going to the inner layer.

The processability of the film was unexpectedly good. There was stable orientation and a very low percentage of bubble breakages.

### Reference Example 2

A 7 layer film is produced in a double bubble (the double bubble method is described in US 3,456,044) commercial line with the following recipe:
Outer layer 95% S1+5% additives
Internal layer 1 95%S1+5% additives
Internal layer 2 100% E1
Barrier layer, PVDC copolymer
Internal layer 3, 100% MP1
Polyamide layer, 100% PA1
Inner sealing layer, 60% P1+30%P2+10%MP2

The thickness of the structure is 4.5/4.5/5/5/4.5/4/12.5 starting from the outer and going to the inner layer.

**Table 1**

| Type | Description | Manufacturer | Melt Index g/10 min | Density g/cm³ | Melting point ° C |
|---|---|---|---|---|---|
| S1 | Styrene butadiene copolymer | | | 1.03 | no |
| E1 | FD50 | VERSALIS | 0.4 | | |
| MP1 | MODIFIED EVA | DUPONT | 2 | 0.95 | |
| MP2 | MODIFIED LLDPE | DOW | 2 | 0.92 | 122 |
| PA1 | POLYAMIDE 6/66 | UBE | | | 196 |
| P1 | PL1880 | DOW | 1 | 0.902 | 100 |
| P2 | ELITE5400 | DUPONT | 1 | 0,916 | 122 |

### Tests

1. Haze measurement. The haze measurement was done according to ASTM D 1003.
2. Gloss measurement. This was done according to BS 2782.
3. Shrinkage measurement done according to ASTM 2732 at 90°C.
4. Puncture resistance

The puncture resistance was measured with a Versa Test instrument from company Mecmesin.

The results are displayed in table 2
The commercial films used for the comparison did not include the polyamide in the layer next to the sealing layer but instead the layer contained 100% E1.

**TABLE 2**

| | HAZE | GLOSS | SHRINKAGE (MD/TD) | PUNCTUR E FORCE in kilos |
|---|---|---|---|---|
| Example 1 | 11 | 103 | 43/37 | 2.5 |
| Example 2 | 10 | 95 | 38/38 | 1.5 |
| Comparison material 1 | 10.5 | 100 | 50/45 | 2.2 |
| Comparison material 2 | 10.3 | 98 | 52/46 | 1.2 |

The results show that the products according to the Reference Examples have surprising advantages over the prior art commercial products in puncture while keeping an acceptable level of shrinkability and optics.

## Claims

1. A heat shrinkable film, wherein the film comprises at least one internal layer comprising a polyamide, another internal layer comprising a polyvinylidene chloride (PVDC) polymer, an outer layer comprising polyester, an inner sealing layer comprising at least one polyolefin, and a tie layer between the internal layer comprising a PVDC polymer and the inner sealing layer, the tie layer comprising an ethylene ester copolymer, wherein the film shrinks at least 10 % in at least one of the longitudinal and transverse directions when heated at 90°C for 4 seconds, the shrinkability is measured according to ASTM 2732.

2. The film of claim 1 where the inner layer comprises at least one homogeneous polyolefin.

3. The film of claim 1 where the polyamide is blended with a second polyamide.

4. The film of claim 1 where the polyvinylidene polymer is a copolymer.

5. The film of claim 1 where the polyvinylidene polymer is a copolymer of vinylidene chloride and methyl acrylate.

6. A bag, pouch or tube made from the film of any of the previous claims.

7. Use of the film according to anyone of claims 1 - 5 or the bag, pouch or tube according to claim 6 for the packing of food products.

8. A method for producing a heat-shrinkable film according to anyone of claims 1 - 5 wherein at least one internal layer comprising a polyamide, another internal layer comprising a polyvinylidene chloride (PVDC) polymer, an outer layer comprising polyester, an inner sealing layer comprising at least one polyolefin, and a tie layer between the internal layer comprising a PVDC polymer and the inner sealing layer, the tie layer comprising an ethylene ester copolymer, are combined in order to form a multi-layered heat-shrinkable film.

## Patentansprüche

1. Eine wärmeschrumpfbare Folie, wobei die Folie mindestens eine innere Schicht, die ein Polyamid umfasst, eine weitere innere Schicht, die ein Polyvinylidenchlorid (PVDC)-Polymer umfasst, eine äußere Schicht, die Polyester umfasst, eine innere Versiegelungsschicht, die mindestens ein Polyolefin umfasst, und eine Verbindungsschicht zwischen der inneren Schicht, die ein PVDC-Polymer umfasst, und der inneren Versiegelungsschicht umfasst, wobei die Verbindungsschicht ein Ethylenester-Copolymer umfasst, wobei die Folie bei Erhitzen auf 90 °C für 4 Sekunden in mindestens einer der Längs- und Querrichtungen um mindestens 10 % schrumpft, wobei die Schrumpfbarkeit gemäß ASTM 2732 gemessen wird.

2. Die Folie nach Anspruch 1, wobei die innere Schicht mindestens ein homogenes Polyolefin umfasst.

3. Die Folie nach Anspruch 1, wobei das Polyamid mit einem zweiten Polyamid gemischt ist.

4. Die Folie nach Anspruch 1, wobei das Polyvinylidenpolymer ein Copolymer ist.

5. Die Folie nach Anspruch 1, wobei das Polyvinylidenpolymer ein Copolymer aus Vinylidenchlorid und Methylacrylat ist.

6. Beutel, Tasche oder Schlauch, hergestellt aus der Folie nach einem der vorstehenden Ansprüche.

7. Verwendung der Folie gemäß einem der Ansprüche 1 bis 5 oder des Beutels, der Tasche oder des Schlauchs gemäß Anspruch 6 zum Verpacken von Lebensmitteln.

8. Verfahren zur Herstellung einer wärmeschrumpfbaren Folie gemäß einem der Ansprüche 1 bis 5, wobei mindestens eine innere Schicht, die ein Polyamid umfasst, eine weitere innere Schicht, die ein Polyvinylidenchlorid (PVDC)-Polymer umfasst, eine äußere Schicht, die Polyester umfasst, eine innere Versiegelungsschicht, die mindestens ein Polyolefin umfasst, und eine Verbindungsschicht zwischen der inneren Schicht, die ein PVDC-Polymer umfasst, und der inneren Versiegelungsschicht, wobei die Verbindungsschicht ein Ethylenester-Copolymer umfasst, kombiniert werden, um eine mehrschichtige wärmeschrumpfbare Folie zu bilden.

## Revendications

1. Film thermorétractable, dans lequel le film comprend au moins une couche interne comprenant un polyamide, une autre couche interne comprenant un polymère de chlorure de polyvinylidène (PVDC), une couche externe comprenant du polyester, une couche de scellage interne comprenant au moins une polyoléfine, et une couche de liaison entre la couche interne comprenant un polymère PVDC et la couche de scellage interne, la couche de liaison comprenant un copolymère d'ester d'éthylène, dans lequel le film rétrécit d'au moins 10 % dans au moins une des directions longitudinale et transversale lorsqu'il est chauffé à 90 °C pendant 4 secondes, la rétractabilité étant mesurée selon la norme ASTM 2732.

2. Le film selon la revendication 1, dans lequel la couche interne comprend au moins une polyoléfine homogène.

3. Le film selon la revendication 1, dans lequel le polyamide est mélangé avec un second polyamide.

4. Le film selon la revendication 1, dans lequel le polymère de polyvinylidène est un copolymère.

5. Le film selon la revendication 1, dans lequel le polymère de polyvinylidène est un copolymère de chlorure de vinylidène et d'acrylate de méthyle.

6. Sac, pochette ou tube fabriqué à partir du film selon l'une des revendications précédentes.

7. Utilisation du film selon l'une des revendications 1 à 5 ou du sac, de la pochette ou du tube selon la revendication 6 pour l'emballage de produits alimentaires.

8. Procédé de fabrication d'un film thermorétractable selon l'une des revendications 1 à 5, dans lequel au moins une couche interne comprenant un polyamide, une autre couche interne comprenant un polymère de chlorure de polyvinylidène (PVDC), une couche externe comprenant du polyester, une couche de scellage interne comprenant au moins une polyoléfine, et une couche de liaison entre la couche interne comprenant un polymère PVDC et la couche de scellage interne, la couche de liaison comprenant un copolymère d'ester d'éthylène, sont combinées afin de former un film thermorétractable multicouche.
